# EUROPÄISCHE PATENTSCHRIFT

(11) **EP 0 973 020 B1**
(45) Veröffentlichungstag und Bekanntmachung des Hinweises auf die Patenterteilung: **03.06.2009**
(21) Anmeldenummer: 99113140.0
(22) Anmeldetag: 07.07.1999
(51) Int. Cl.: G01K 7/18

(54) **Elektrischer Temperatur-Sensor mit Mehrfachschicht**
Electrical temperature sensor with a multilayer
Capteur de température électrique comprenant une multi-couche

(30) Priorität: 16.07.1998 DE 19831861; 16.07.1998 DE 19831862; 21.04.1999 DE 19918003
(43) Veröffentlichungstag der Anmeldung: 19.01.2000
(73) Patentinhaber: EPIQ Sensor-Nite N.V., 3001 Leuven (BE)
(72) Erfinder: Dietmann, Stefan, 72221 Haiterbach (DE); Baerts, Christian, 3940 Beringen-Paal (BE); Sander, Margit, 63791 Karlstein (DE); Wienand, Karlheinz, Dr., 63741 Aschaffenburg (DE)
(74) Vertreter: Wilson Gunn

(56) Entgegenhaltungen:
- EP-A- 0 543 413
- WO-A-92/15101
- US-A- 4 791 398
- PATENT ABSTRACTS OF JAPAN vol. 017, no. 412 (P-1583), 30. Juli 1993 (1993-07-30) -& JP 05 079922 A (NGK SPARK PLUG CO LTD), 30. März 1993 (1993-03-30)
- PATENT ABSTRACTS OF JAPAN vol. 013, no. 513 (E-847), 16. November 1989 (1989-11-16) -& JP 01 208807 A (MATSUSHITA ELECTRIC IND CO LTD), 22. August 1989 (1989-08-22)

## Beschreibung

Die Erfindung betrifft einen elektrischen Temperatur-Sensor mit einer Platin aufweisenden Widerstandsschicht als mit elektrischen Anschlüssen versehener Messwiderstand auf einer elektrisch isolierenden Oberfläche eines Keramik-Substrats, wobei die Widerstandsschicht zum Schutz gegen Kontamination oder Beschädigung mit wenigstens einer Schicht versehen ist; darüb erhinaus betrifft die Erfindung in einer weiteren Ausführungsform einen elektrischen Temperatur-Sensor, dessen Widerstandsschicht zum Schutz gegen Kontamination oder Beschädigung mit einer Mehrfachschicht versehen ist, die eine elektrisch isolierende Zwischenschicht und eine äussere Deckschicht aufweist.

Weiterhin betrifft die Erfindung ein Verfahren zur Herstellung eines Temperatur-Sensors mit einer Platin aufweisenden Widerstandsschicht, die in Form einer Dünnschicht auf eine elektrisch isolierende Oberfläche eines Keramiksubstrats aufgebracht und strukturiert wird.

Als Mehrfachschicht ist gemäss EP 0 327 535 B1, Spalte 2, Zeilen 20-25 ein aus mehreren Schichten bestehender Schutzüberzug eines Platin-Dünnfilm-Widerstandsthermometers bezeichnet; eine solche Mehrfachschicht kann beispielsweise gemäss Zeilen 26-31 eine dielektrische Schicht als elektrisch isolierende Zwischenschicht und eine äussere Deckschicht aufweisen.

Entsprechend WO92/15101 wird ein aus einer doppelten Lage Metall der Platingruppe bestehender Temperatursensor als eine Passivierungsschicht über einer platinresistenten Schicht zum Schutz vor Oxidation angebracht. Die doppelte Schicht besteht aus einer Keramik- und einer Glasschicht und verhindert, dass Sauerstoff bei Temperaturen von bis zu 1000°C die platinresistente Schicht erreicht.

Entsprechend EP0543413 wird aufgezeigt, dass ein Temperatursensor einen Widerstandsdraht sowie einen den Widerstandsdraht tragenden Keramikträger besitzt. Der Widerstandsdraht verfügt über einen ionisierenden, komponentenstabilen Konduktordraht, der von seinem Minuspol abzweigt. Der Widerstandsdraht und der assoziierte abzweigende Draht sind zwischen keramischen Stütz schichten geschichtet. Die Migration im Widerstandsdraht wird unterdrückt, um die Erhöhung des Widerstands des Widerstandsdrahtes zu verhindern.

Aus der EP 0 327 535 B1 ist ein Temperatursensor mit einem Dünnschicht-Platinwiderstand bekannt; dabei ist der Temperaturmesswiderstand aus Platin auf einer Oberfläche eines elektrisch isolierenden Substrats gebildet, wobei das Widerstandselement mit einer dielektrischen Schutzschicht abgedeckt ist, welche vorzugsweise aus Siliziumdioxid besteht und eine Dicke im Bereich von 2000 - 4000 Angström aufweist. Weiterhin ist als Deckschicht eine Diffusionssperrschicht vorgesehen, die durch Niederschlag von Titan in Sauerstoffatmosphäre zur Bildung von Titanoxid aufgebracht wird. Diese Sperrschicht weist eine Dicke im Bereich von 6000 - 12000 Angström auf. Auch wenn die Diffusionssperrschicht den Zutritt von Sauerstoff zur dielektrischen Schicht ermöglicht und damit einen Angriff freiwerdender Metallionen aus der Glasschicht auf die Platinschicht weitgehend verhindert, kann es bei extremen Umgebungsbedingungen trotzdem zu einem Angriff auf die Platinschicht führen, so dass ihr physikalisches Verhalten als Temperaturmesselement gestört wird.

Weiterhin ist ein elektrischer Messwiderstand für Widerstandsthermometer sowie ein Verfahren zur Herstellung eines solchen elektrischen Messwiderstandes aus der US-PS 4,050,052 bzw. der entsprechenden DE 25 27 739 C3 bekannt.

Aufgabe der Erfindung ist es, den Messwiderstand gegen äussere chemische oder mechanische Angriffe zu schützen und insbesondere sicherzustellen, dass keinerlei Zutritt von Kontamination aus der äusseren Atmosphäre in den Messwiderstand möglich wird.

Die Aufgabe wird für einen elektrischen Temperatur-Sensor gemäss einer ersten Ausführungsform der Erfindung mit einer Platin aufweisenden Widerstandsschicht als mit elektrischen Anschlüssen versehener Messwiderstand auf einer elektrisch isolierenden Oberfläche eines Keramik-Substrats, wobei die Widerstandsschicht zum Schutz gegen Kontamination oder Beschädigung mit einer Mehrfach-Schicht versehen ist, die eine elektrisch isolierende Zwischenschicht und eine äussere Deckschicht aufweist, dadurch gelöst, dass die Zwischenschicht als Diffusions-sperrschicht ausgebildet ist, die Aluminiumoxid, Magnesiumoxid oder Tantaloxid oder eine Mischung aus zwei Werkstoffen dieser Oxide oder ein Mehrschichtsystem aufweist, wobei die Deckschicht als Passivierungsschicht ausgebildet ist, auf der der Substrat-Oberfläche abgewandten Seite der Widerstandsschicht ausserhalb der Zwischenschicht eine Elektrode aufgebracht ist, wobei sich zwischen der Elektrode und der Widerstandsschicht wenigstens ein Teil der Passivierungsschicht befindet.

Als besonders vorteilhaft erweist sich der einfache und kostengün stige Aufbau, so dass der erfindungsgemässe Temperatur-Sensor auch als Massenprodukt hergestellt werden kann.

Vorteilhafte Ausgestaltungen des Temperatur-Sensors der zweiten Ausführungsform sind in den Ansprüchen 2 bis 24 angegeben.

Die Deckschicht besteht vorzugsweise aus Glas.

In einer weiteren vorteilhaften Ausgestaltung der zweiten Ausführungsform besteht die Deckschicht aus einer Mischung von Siliziumoxid, Bariumoxid und Aluminiumoxid, wobei das Gewichtsverhältnis der drei Oxide im Bereiche von 35:50:15 liegt. Das eigentliche Keramiksubstrat besteht vorzugsweise aus Aluminiumoxid.

Die Dicke der Zwischenschicht liegt im Bereich von 0,2 µm bis 30 µm, während die äussere Deckschicht eine Dicke im Bereich von 10 bis 30 µm aufweist; die Dicke der gesamten Beschichtung (als Mehrfachschicht) liegt im Bereich von 10,5 bis 50 µm.

Die Gesamthöhe eines Temperatur-Sensors gemäss der zweiten Ausführungsform liegt im Bereich von 0,1 bis 1 mm. Seine Grundfläche weist eine Länge im Bereich von 2 bis 15 mm und eine Breite im Bereich von 0,5 bis 6 mm auf. Die Geometrie des, in der zweiten Ausführungsform aufgebauten Temperatur-Sensor auf Träger (Modul) ergibt sich in den gleichen Bereichen für Höhe, Länge und Breite wie sie zuvor für das erste Ausführungsbeispiel bereits beschrieben wurde.

Als vorteilhaft erweist sich darüberhinaus die miniaturisierte Bauweise, so dass der Temperatur-Sensor auch direkt im Abgas für Kfz-Anwendungen bis 1100 DEG C eingesetzt werden kann, wobei aufgrund der Miniaturisierung auch eine Redundanzschaltung mehrerer Temperatursensoren möglich ist, so dass die Zuverlässigkeit der Mess- oder Regelanlage erheblich verbessert wird; darüberhinaus wird das thermische Verhalten verbessert.

In einer weiteren vorteilhaften Ausgestaltung der ersten Ausführungsform ist die zusätzliche Platin-Schicht auf einem im Abstand zum Messwiderstand gegenüberliegend angeordneten Trägersubstrat aufgebracht; die zusätzliche Platin-Schicht deckt dabei vorzugsweise eine auf dem Trägersubstrat aufgebrachte Zuleitung zum Messwiderstand ab; weiterhin ist in einer vorteilhaften Ausgestaltung die zusätzliche Platin-Schicht durch eine Isolationsschicht von der Zuleitung galvanisch getrennt; als vorteilhaft erweist sich dabei dass die Platin-Schicht elektrisch negativ gegenüber der Widerstandsschicht bzw. der Zuleitung vorgespannt werden kann und ausserdem die Überdeckung der Zuleitung einen zusätzlichen Schutz darstellt.

Die Elektrode ist vorzugsweise zwischen der Passivierungsschicht und der Zwischenschicht angeordnet. Weiterhin kann in einer bevorzugten Ausgestaltung die Elektrode von der Passivierungsschicht umhüllt sein.

Die Elektrode besteht vorzugsweise aus einer Platin aufweisenden Schicht, insbesondere aus einer zusätzlichen Platinschicht.

Es ist auch möglich, die zusätzliche Platin-Schicht auf der der Widerstandsschicht abgewandten Seite der Passivierungsschicht anzuordnen. Dabei ergibt es sich als Vorteil, dass die zusätzliche Platin-Schicht die Widerstandsschicht im Sinne einer "Opferelektrode" gegen atmosphärische Vergiftungen schützt.

In einer weiteren Ausgestaltung ist die zusätzliche Platin-Schicht mit einem elektrischen Anschluss versehen; dabei ist es möglich, die Platin-Schicht gegenüber wenigstens einem Anschluss des Messwiderstandes elektrisch negativ vorzuspannen. Als vorteilhaft erweist sich dabei, dass die bei extremen Umgebungsbedingungen als positive Ionen vorhandenen Platin-Gifte (Si- und Metallionen) zur negativen Platin-Schicht gezogen werden.

Die Erfindung wird für ein Verfahren zur Herstellung eines elektrischen Temperatursensors mit einer Platin aufweisenden Widerstandsschicht, die in Form einer Dünns chicht auf eine elektrisch isolierende Oberfläche eines Keramiksubstrats aufgebracht und strukturiert wird, **dadurch gekennzeichnet, dass** nach Abschluss der Strukturierung der Widerstand zum Schutz gegen Kontamination oder Beschädigung mit einer Mehrfachschicht versehen wird, wobei unter Verwendug von Abschattmasken zum Erhalt freier Kontaktflächen mindestens eine Diffusionssperrschicht als Zwischenschicht aufgebracht wird und im Abstand zur Widerstandsschicht eine elektrisch leitende Schicht als Elektrode aufgebracht wird, auf die elektrisch leitende Schicht eine Passivierungsschicht aufgebracht wird, wobei sich zwischen der Elektrode und der Widerstandsschicht wenigstens ein Teil der Passivierungsschicht befindet.

Als Elektrode wird vorzugsweise eine Platin aufweisende Schicht, insbesondere eine Platin-schicht aufgebracht.

Vorteilhafte Ausgestaltungen des Verfahrens sind in den Ansprüchen 26 bis 30 angegeben.

Dabei wird vorzugsweise die Dünnschicht durch das Aufbringen einer vorgegebenen Fotoresistmaske und Übertragen mittels lonenätzens strukturiert. Eine strukturierte Dünnschicht hat den Vorteil, dass mit geringem Materialeinsatz und auf kleiner Fläche hochohmige Widerstände hergestellt werden können. Die beschriebene Strukturierungstechnik ist dem früher verwendeten Laser-Mäandrierverfahrens vorzuziehen, da die hiermit hergestellten Strukturen sehr saubere Strukturkanten ohne Randschädigungen aufweisen. Die Strukturen sind sehr langzeitstabil und lassen sich durch eine einstellbare Flankensteilheit (z.B. rampenförmig) ideal mit einer Diffusionssperrschicht dicht abdecken.

Als vorteilhaft hat sich die Herstellung der Diffusionssperrschicht in Dünnschichttechnik erwiesen, die nach dem Entfernen der Fotoresistmaske aufgebracht wird. Mittels Dünnschichttechnik lassen sich hermetisch dichte Schichten aufbringen. Die Diffusionssperrschicht kann auch mittels Siebdruck oder Plasmasprayens aufgebracht werden. Durch die Verwendung von Abschattmasken kann mit dem beschriebenen Verfahren eine Struktur aufgebracht werden; ein aufwendiger und kostenintensiver Strukturierungsprozess zum Erhalt freier Kontaktflächen entfällt dabei. In einer bevorzugten Ausgestaltung des Verfahrens wird auf die Diffusionssperrschicht die elektrisch leitende Schicht als Elektrode mit Abschlusskontakten unter Verwendung von Abschattmasken mittels PVD- oder Sputterverfahrens aufgebracht.

Es ist jedoch auch möglich die elektrisch leitende Schicht mittels Siebdruck aufzubringen. Dieses Verfahren wird bevorzugt verwendet, wenn die elektrisch leitende Schicht als Elektrode auf ein dem Temperatursensor gegenüber angeordnetes Trägersubstrat aufgebracht wird.

Weiterhin wird vorteilhafterweise auf die als Elektrode dienende elektrisch leitende Schicht eine Passivierungsschicht mittels Siebdrucken aufgebracht. Das Siebdruckverfahren erweist sich dabei als besonders zweckmässig und kostengünstig.

Im Herstellprozess können mehrere Rohlinge aus Keramik ein zusammenhängendes Mehrfachsubstrat bilden, das gleichzeitig kostengünstiger beschichtet und erst nach Aufbringen der Passivierungsschicht durch Sägen vereinzelt wird.

In einer bevorzugten Ausgestaltung gemäss der Erfindung besteht das Keramik-Substrat aus Al₂O₃. Weiterhin besteht auch die Zwischenschicht gemäss beiden Ausführungsformen vorzugsweise aus Al₂O₃, MgO oder einer Mischung aus beiden Materialien, wobei der Gewichtsanteil von Al₂O₃ im Bereich von 20% bis 70% liegt; weiterhin ist es möglich, die Zwischenschicht aus einem Schichtsystem mit einer Schichtfolge von mindestens zwei Schichten aufzubauen, die jeweils aus mindestens einem Oxid aus der Gruppe Al₂O₃, MgO, Ta₂O₅ gebildet sind; dabei kann wenigstens eine Schicht aus zwei der genannten Oxide gebildet sein, wobei vorzugsweise eine physikalische Mischung von Oxiden eingesetzt wird; es ist jedoch auch möglich, Mischoxide zu verwenden.

In einer weiteren Ausgestaltung der Erfindung kann die aus Al₂O₃, MgO, Ta₂O₅ bestehende Gruppe der Oxide um Hafniumoxid erweitert werden.

Vorzugsweise besteht die Zwischenschicht aus einem Einschichtsystem gemäss Tabelle 1 mit den in den Positionen 1 bis 6 angegebenen Werkstoffen oder aus einem Mehrschichtsystem gemäss Tabelle 2, das wenigstens zwei Schichten 1 und 2 aufweist, wobei sich an Schicht 2 jedoch eine weitere Schicht bzw. mehrere Schichten anschliessen können. Die unterschiedlichen Schichtwerkstoffe sind in den einzelnen Positionen bzw. Zeilen mit Ziffern 7 bis 30 bezeichnet.

**Tabelle 1**

| Einschichtsystem | |
|---|---|
| (1) | Nur Al₂O₃ |
| (2) | Nur MgO |
| (3) | Nur Ta₂O₅ |
| (4) | Mischung Al₂O₃/MgO |
| (5) | Mischung Al₂O₃/Ta₂O₅ |
| (6) | Mischung MgO/Ta₂O₅ |

**Tabelle 2**

| Mehrschichtsystem | | |
|---|---|---|
| | **Schicht 1** | **Schicht 2** |
| 7 | nur Al₂O₃ | nur Al₂O₃ |
| 8 | nur Al₂O₃ | nur MgO |
| 9 | nur MgO | nur MgO |
| 10 | nur Ta₂O₅ | nur Ta₂O₅ |
| 11 | nur Ta₂O₅ | nur Al₂O₃ |
| 12 | nur Ta₂O₅ | nur MgO |
| 13 | Mischung Al₂O₃/MgO | nur Al₂O₃ |
| 14 | nur Al₂O₃ | Mischung Al₂O₃/MgO |
| 15 | Mischung Al₂O₃/MgO | Mischung Al₂O₃/MgO |
| 16 | Mischung Ta₂O₅/MgO | nur Al₂O₃ |
| 17 | nur Ta₂O₅ | Mischung Al₂O₃/MgO |
| 18 | Mischung Ta₂O₅/MgO | Mischung Al₂O₃/MgO |
| 19 | Mischung Al₂O₃/Ta₂O₅ | nur Al₂O₃ |
| 20 | nur Al₂O₃ | Mischung Ta₂O₅/MgO |
| 21 | Mischung Al₂O₃/MgO | nur Ta₂O₅ |
| 22 | nur Ta₂O₅ | Mischung Al₂O₃/Ta₂O₅ |
| 23 | nur Al₂O₃ | Mischung Al₂O₃/Ta₂O₅ |
| 24 | Mischung Al₂O₃/MgO | Mischung Ta₂O₅/MgO |
| 25 | Mischung Ta₂O₅/MgO | Mischung Ta₂O₅/MgO |
| 26 | Mischung Al₂O₃/Ta₂O₅ | nur Ta₂O₅ |
| 27 | nur MgO | Mischung Al₂O₃/MgO |
| 28 | nur MgO | Mischung Al₂O₃/Ta₂O₅ |
| 29 | Mischung Al₂O₃/MgO | nur MgO |
| 30 | Mischung Al₂O₃/Ta₂O₅ | nur MgO |

Der Einsatz dieser Materialien erweist sich als besonders vorteilhaft, da diese Metalloxide auch noch bei hohen Temperaturen stabil sind. Die Zwischenschicht wird vorzugsweise mittels PVD-, CVD-, IAD-, IBAD-, PIAD- oder Magnetron-Sputter-Verfahren hergestellt, dabei bedeuten PVD: Physical Vapour Deposition,
IAD: Ion Assisted Deposition,
IBAD: Ion Beam Assisted Deposition,
PIAD: Plasma Ion Assisted Deposition,
CVD: Chemical Vapour Deposition.

Weiterhin weist die Passivierungsschicht gemäß beiden Ausführungsformen eine Mischung aus SiO₂, BaO und Al₂O₃ auf, wobei der Gewichts-Anteil von SiO₂ im Bereich von 20% bis 50% liegt.

Als vorteilhaft erweist sich dabei, daß diese Mischung einen hohen Isolationswiderstand aufweist.

Im folgenden ist der Gegenstand der Erfindung anhand der Figuren 1 bis 9 näher erläutert.
Figur 1 zeigt einen Meßwiderstand mit Widerstandsschicht auf einem Keramiksubstrat, wobei die Widerstandsschicht durch eine Diffusionssperrschicht und eine Passivierungsschicht abgedeckt ist;
Figur 2 zeigt eine ähnliche Ausführungsform wie Figur 1, wobei im Abstand zur Widerstandsschicht eine zusätzliche Platin-Schicht auf die Diffusionssperrschicht vorgesehen ist; beide Figuren sind im Querschnitt dargestellt;
Figur 3 zeigt eine ähnliche Ausführungsform wie Figur 1, wobei im Abstand zur Widerstandsschicht eine zusätzliche Platin-Schicht auf der Passivierungsschicht aufgebracht ist.
Figur 4a zeigt ein zur Aufbringung des Sensors (mit zusätzlicher Platinschicht) vorbereitetes Trägersubstrat, mit zusätzlicher Elektrode, die mit einer eigenen Anschlußleitung versehen ist;
Figur 4b zeigt in der Draufsicht einen komplett montierten Temperatur-Sensor-Modul gemäß Figur 4a;
Figur 5 zeigt einen Querschnitt entlang der Linie AA der Figur 4b;
Figur 6a zeigt eine ähnliche Ausführungsform wie Figur 4a eines zum Aufbringen des Widerstandes vorbereiteten Trägersubstrats (mit zusätzlicher Elektrode), wobei bis zur Elektrode eine gemeinsame Zuleitung für die Elektrode und einen Anschlußkontakt der Widerstandsschicht verwendet wird;
Figur 6b zeigt in Draufsicht einen komplett montierten Temperatursensor unter Verwendung von einem Trägersubstrat gemäß Figur 6a;
Figur 7 zeigt einen Querschnitt entlang der Linie AA der Figur 6b;
Figur 8a zeigt eine weitere Ausführungsform ähnlich Figur 6a eines zum Aufbringen des Sensors mit zusätzlicher Elektrode vorbereitetes Trägersubstrat, wobei ein Anschlußkontakt über die Elektrode elektrisch verbunden ist;
Figur 8b zeigt in Draufsicht einen komplett montierten Temperatursensor unter Verwendung von einem Trägersubstrat gemäß Figur 8a;
Figur 9 zeigt einen Querschnitt entlang der Linie AA der Figur 8b.

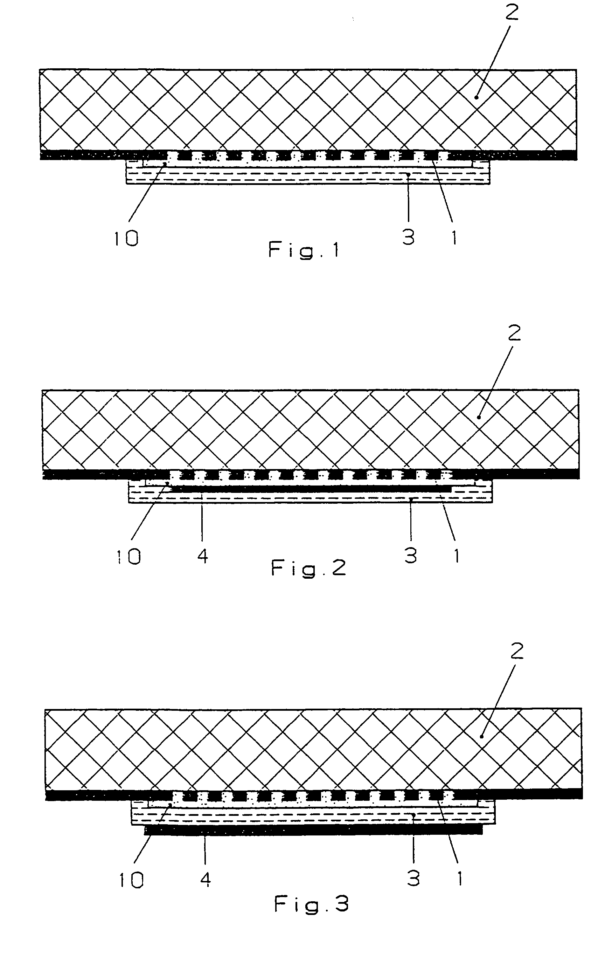

Der Fachmann wird selbstverständlich einsehen, dass in der nachfolgenden Beschreibung die Figuren 1 und 2 Beispiele liefern, die zum Verständnis der Erfindung nützlich sind und nicht bestimmte Ausführungsformen der beanspruchten Erfindung darstellen.

Gemäß Figur 1 befindet sich die als Meßwiderstand dienende Widerstandsschicht 1 auf einer ebenen Oberfläche eines Keramiksubstrats 2, welches aus Aluminiumoxid besteht. Die Widerstandsschicht 1 ist in Form eines Mäanders mit Anschluß-Kontaktflächen ausgebildet, wie es beispielsweise aus der DE 40 26 061 C1 bekannt ist. Die Widerstandsschicht 1 ist auf ihrer dem Substrat abgewandten Seite mit einer Dlffusionssperrschicht als Zwischenschicht 10 versehen, welche ihrerseits mit einer Passivierungsschicht 3 aus Glas abgedeckt ist. Aufgrund der Glas-Passivlerungsschicht wird die empfindsame Struktur des Platin-Meßwiderstandes 1 gegen atmosphärische Vergiftungen der Umgebung wirksam geschützt. Die Ausgestaltung eines Mehrschichtenaufbaus hält die für die Widerstandsschicht 1 aus Platin sehr schädlichen Siliziumionen zurück, welche Platin sehr rasch bei hohen Temperaturen durch physikalische Diffusion kontaminieren und damit die Temperatur/Widerstands-Funktion der sich daraus ergebenden Platinlegierung drastisch beeinflussen, so daß die Hochtemperaturbeständigkäit der Widerstandsschicht 1 für Temperaturmessungen nicht mehr gegeben ist. Aufgrund der ersten thermodynamisch stabilen, und reinen Aluminiumoxidschicht als Zwischenschicht 10 bzw. Diffusionsbarriere wird der Zutritt von Siliziumionen und anderen das Platin vergiftenden Substanzen bzw. Ionen verhindert, und somit die mäanderförmig ausgestaltete Widerstandsschicht vor Vergiftung geschützt. Die Aufbringung der Zwischenschicht 10 kann durch physikalisches Aufdampfen erreicht werden. Die Aluminiumoxidschicht wird überstöchiometrisch in einer Weise so aufgebracht, daß eine sehr stabile Schicht von reinem Aluminiumoxid (Al₂O₃) die Platinstruktur der Widerstandsschicht 1 abdeckt. Die Siliziumionen aufweisende Passivierungsschicht 3 aus Glas erhält somit keinerlei Kontakt mit der aktiven Platinwiderstandsschicht und eine Abdichtung der Widerstandsschicht 1 als mechanischer Schutz gegenüber äußeren kontaminierenden Elementen ist damit gewährleistet.

Gemäß Figur 2 befindet sich die als Meßwiderstand dienende Widerstandsschicht 1 aus Platin auf einer ebenen Oberfläche eines Substrats 2 aus Auliuminiumoxidkeramik (Al₂O₃). Sie ist vorzugsweise in Form eines Mäanders mit Anschluß-Kontakttfeldern ausgebildet, wie es beispielsweise aus der bereits genannten DE 40 26 061 C1 bekannt ist. Die Widerstandsschicht 1 ist auf der dem Substrat 2 abgewandten Seite von einer Diffusionssperrschicht als Zwischenschicht 10 umgeben, wobei diese wiederum von einer äußeren Deckschicht als Passivierungsschicht 3 aus Glas abgedeckt ist; zwischen der Passivierungsschicht 3 und der Diffusionssperrschicht als Zwischenschicht 10 ist in einer parallelen Ebene zur Substrat-Ebene eine zusätzliche Platinschicht als Elektrode 4 im Abstand zur Widerstandsschicht 1 aufgebracht, welche aus der Passivierungsschicht 3 aus Glas eventuell austretende Siliziumionen von der Meßwiderstandschicht 1 aus Platin fernhalten soll, indem sie die Siliziumionen absorbiert. Es ist somit möglich auch bei agressiver Hochtemperaturumgebung einen Schutz vor vagabundierenden Siliziumionen aus sich auflösenden Siliziumoxidverbindungen der Passivierungsschicht hinzunehmen, wobei die sonst eintretende Veränderung der Widerstandstemperaturkurve des Meßwiderstandes durch die vorgelagerte zusätzliche Platinschicht als Elektrode 4 verhindert wird. Auf diese Weise wird die Hochtemperaturbeständigkeit der Widerstandsschicht 1 aus Platin und damit des gesamten Temperatur-Sensors für eine lange Meßperiode aufrechterhalten.

Figur 3 zeigt einen ähnlichen Aufbau wie Figur 1, wobei jedoch außen auf der Außenoberfläche der Passivierungsschicht 3 eine zusätzliche Platin-Schicht als Elektrode 4 vorgesehen ist; diese Platinschicht 4 ist in einem gleichmäßigen Abstand zur eigentlichen Widerstandsschicht 1 elektrisch isolierend außen auf der Passivierungsschicht 3 angeordnet. Die zusätzliche Platin-Schicht als Elektrode 4 schützt die Widerstandsschicht 1 aus Platin im Sinne einer "Opferelektrode" gegen atmosphärische Vergiftungen. Dabei wird die zusätzliche Platinschicht als Elektrode 4 gegenüber der Widerstandsschicht 1 negativ vorgespannt, so daß vergiftende Substanzen bzw. Ionen angesaugt werden und die Widerstandsschicht 1 geschützt wird.

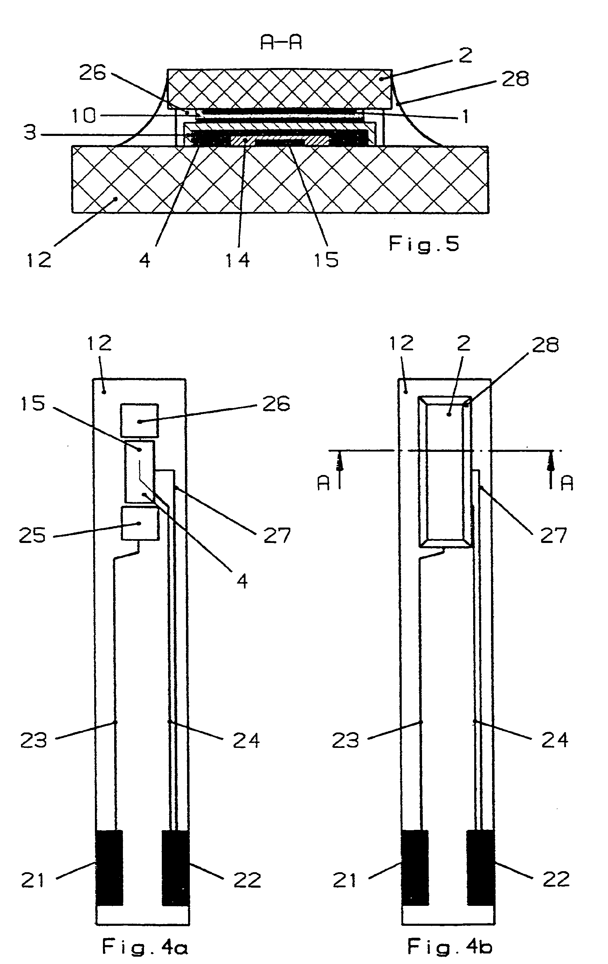

Gemäß Figuren 4a, 4b und 5 ist es darüberhinaus möglich, die zusätzliche Platinschicht als Elektrode 4 mit Anschluß-Kontaktfeld einzusetzen und sie mittels eines externen Anschlusses gegenüber dem Platin-Meßwiderstand bzw. Widerstandsschicht 1 negativ vorzuspannen. Eine solche negativ vorgespannte Platinschicht als Elektrode 4 hat den wesentlichen Vorteil, daß die die Widerstandsschicht 1 vergiftenden Ionen zuvor abgesaugt werden.

Gemäß Figuren 4b und 5 befindet sich die zusätzliche Platinschicht als Elektrode 4 des Temperatur-Sensors als Gegenelektrode (bzw. polarisierende Elektrode) mit ihrer Außenoberfläche auf einem Trägersubstrat 12, welches zur mechanisch festen Halterung und elektrischen Verbindung des Temperatur-Sensors dient; dabei ergibt sich neben rascher Ansprechbarkeit auch ein gewisser Schutz in der Praxis gegen mechanische Beschädigungen des Temperatur-Sensors; nach Figur 4a sind die externen Anschluß-Kontaktfelder 21, 22 über Platin-Leiter 23, 24 mit geringem Widerstand auf der Oberfläche des Trägersubstrats 12 mit Anschluß-Kontaktfeldern 25, 26 zur Kontaktierung der Anschluß-Kontakte der Widerstandsschicht 1 (Figur 5) verbunden. Anschlußkontaktfeld 26 ist dabei über den mit Ziffer 15 bezeichneten Teil der Zuleitung 24 mit Anschlußkontaktfeld 25 verbunden, wobei der von oben nicht sichtbare Teil 15 gestrichelt dargestellt ist.

Weiterhin ist Anschluß 22 mit Zuleitung 27 zur Kontaktierung der im Querschnitt gemäß Figur 5 sichtbaren zusätzlichen Platinschicht als Elektrode 4 verbunden, wobei Zuleitung 27 separat vom Anschlußkontakt 22 aus geführt ist; Anschlußkontakt 22 ist mit dem negativen Pol einer Stromversorgung verbunden, während Anschluß 21 positiv geschaltet ist. Die Anschlußkontaktfelder 25, 26 zur Verbindung der Widerstandsschicht 1 (Figur 4a, Figur 5) sind mittels angesinterter Platinleitpaste aufgebracht. Anhand Figur 5 ist erkennbar, daß die symbolisch in Figur 4a dargestellte Zuleitung 24 zu Anschlußkontaktfläche 26 direkt auf dem Trägersubstrat 12 aufgebracht ist, wobei dieser Teil der Zuleitung 24 mit Bezugsziffer 15 versehen ist. Weiterhin ist im Querschnitt erkennbar, daß Zuleitung 15 (bzw. 24) von einer Isolationsschicht 14 umgeben ist, die die Zuleitung 15 gegenüber der im Querschnitt nach Figur 5 erkennbaren zusätz-lichen Platinschicht als Elektrode 4 elektrisch isoliert. Die zusätzliche Platinschicht als Elektrode 4 ist auf der dem Trägersubstrat 12 abgewandten Seite von einer Passivierungsschicht 3 umgeben, die vorzugsweise aus Glas besteht. Die Passivierungsschicht 3 ist mechanisch fest mit Zwischenschicht 10 als Diffusionssperrschicht verbunden, in der auch die als Mäander ausgebildete Widerstandsschicht 1 - ähnlich wie nach Figur 3 - eingebettet ist. Wie anhand Figur 5 erkennbar ist, ist die zwischen den Keramiksubstraten 2 und 12 angeordnete Widerstandsmeßschicht 1 gegenüber äußeren mechanischen Schädigungen gut geschützt.

Ein zwischen Meßwiderstand 1 und Trägersubstrat 12 auftretender Spalt wird gemäß Figuren 4b und 5 mittels Abdichtwerkstoff 28 - vorzugsweise Abdichtglas - versiegelt, um die bereits eingangs erwähnte Bypaßbildung zwischen den Meßwiderstandskontakten zu verhindern; damit werden auch die Anschlußkontaktfelder versiegelt.

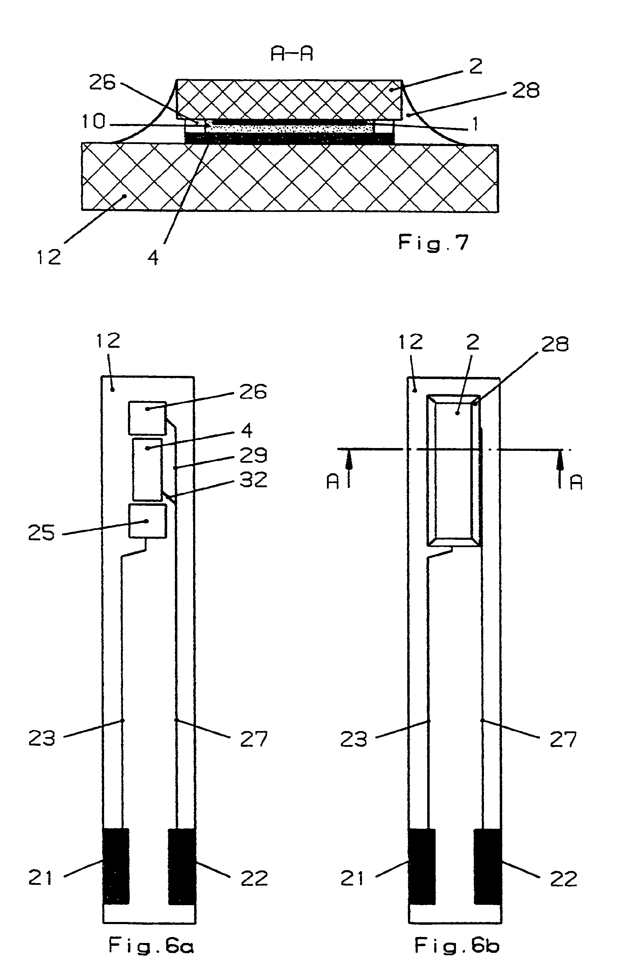

Gemäß Figur 6a ist ein ähnlicher Aufbau des Temperatur-Sensors wie in Figur 4a vorgesehen, wobei die Elektrode 4 jedoch über eine Abzweigung 32 an die zwischen Anschluß-Kontaktfeld 22 des Sensors und Anschlußkontaktfeld 26 des Widerstandes 1 verlaufende Leitung 27 angeschlossen ist; der zum Anschlußkontaktfeld 26 des Widerstandes 1 verlaufende Zweig ist mit Bezugszeichen 29 bezeichnet

Figur 6b zeigt - ähnlich wie Figur 4b - den fertig montierten Temperatur-Sensor, wobei Keramiksubstrat 2 in der Draufsicht erkennbar ist.

Figur 7 zeigt - ähnlich wie Figur 5 - einen Querschnitt entlang der Linie AA der Figur 6b.

Da die in Figur 7 gezeigte Querschnittszeichnung keine Passivierungsschicht 3 enthält, wird der Fachmann einsehen, dass diese Zeichnung keine bestimmte Ausführungsform der beanspruchten Erfindung darstellt, sondern lediglich zum leichteren Verständnis der beanspruchten Erfindung vorgesehen ist.

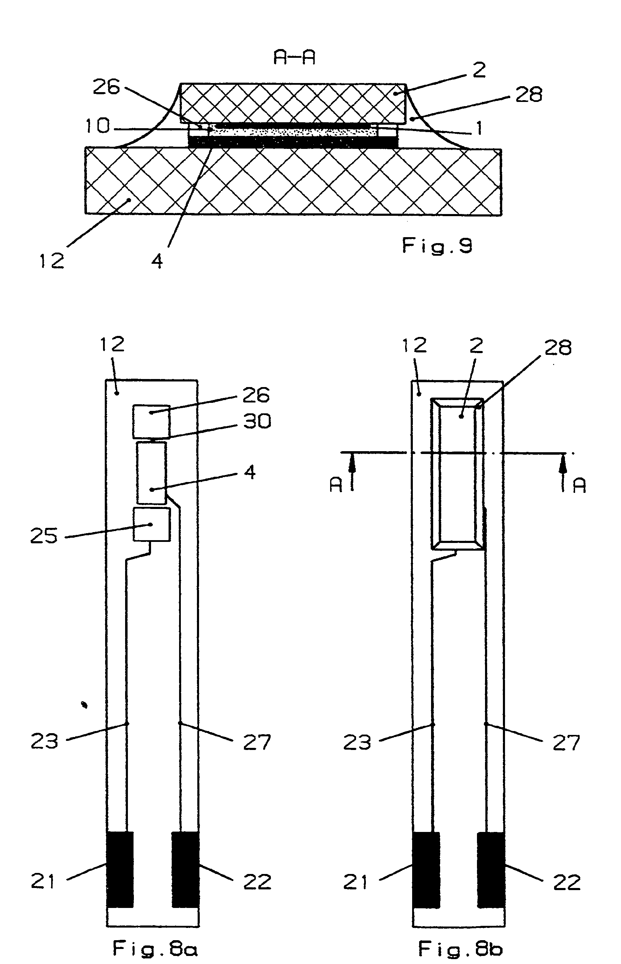

In Figur 8a ist ein ähnlicher Aufbau des Temperatur-Sensors wie in Figur 4a dargestellt, wobei jedoch ein Anschlußkontaktfeld 26 für die Widerstandsschicht über die Elektrode 4 direkt (in Reihe) mit der Zuleitung 27 zum Anschlußkontaktfeld 22 verbunden ist; der Verbindungspunkt zwischen Elektrode 4 und Anschlußkontaktfeld 26 ist mit Bezugszeichen 30 bezeichnet,

Figur 8b zeigt - in ähnlicher Form wie Figur 4b - eine Draufsicht des fertig montierten Temperatur-Sensors, wobei das Keramiksubstrat 2 erkennbar ist.

Figur 9 zeigt - ähnlich wie Figur 5 - einen Querschnitt entlang der Linie AA gemäss Figur 8b.

Da die in Figur 9 gezeigte Querschnittszeichnung keine Passivierungsschicht 3 enthält, wird der Fachmann einsehen, dass diese Zeichnung keine bestimmte Ausführungsform der beanspruchten Erfindung darstellt, sondern lediglich zum leichteren Verständnis der beanspruchten Erfindung vorgesehen ist.

Die Herstellung eines Temperatur-Sensors gemäß Figur 2 erfolgt in folgenden Verfahrensschritten:
1. Aufbringen einer Platin-Widerstandsschicht auf Keramik-Substrat 2 mittels PVD (Physical Vapour Deposition), IAD (Ion Assisted Deposition), Magnetron-Sputtern oder Resinatdruck.
2. Aufbringen einer Fotoresistmaske (Belacken im Spincoating, Lacktrocknen, UV-Belichten, Entwickeln und Härten).
3. Übertragen der Resistmaske auf die Platin-Widerstandsschicht mittels Ionenätzen der nicht durch die Fotoresistmaske abgedeckten Bereiche.
4. Entfernen der Fotoresistmaske durch NaOH- oder Plasmastrippen.
5. Aufbringen der Al₂O₃-Sperrschicht mittels Magnetron-Sputtern, PVD, CVD, IAD, PIAD oder Plasmaspritzens. Die Beschichtung der Kontakflächen wird durch die Verwendung von Abschattmasken verhindert.
6. Aufbringen der zusätzlichen Platinschicht und der Kontaktpads mittels Siebdrucken oder PVD bzw. Sputterns unter Verwendung von Abschattmasken.
7. Einstellen des Widerstandwertes der Widerstandsschicht mittels Lasertrimmens.
8. Aufbringen der Passivierungsschicht mittels Siebdruckens.
9. Vereinzeln des Substratnutzens zu einzelnen Widerstandssensoren durch Sägen.
10. Aufbringen des Temperatursensors auf das Trägersubstrat mit den siebgedruckten Strukturen aus Platinleitpaste durch Ansintern.

## Patentansprüche

1. Elektrischer Temperatur-Sensor mit einer Platin aufweisenden Widerstandsschicht (1) als mit elektrischen Anschlüssen versehener Messwiderstand auf einer elektrisch isolierenden Oberfläche eines Keramik-Substrats (2), wobei die Widerstandsschicht (1) zum Schutz gegen Kontamination oder Beschädigung mit einer Mehrfach-Schicht versehen ist, die eine elektrisch isolierende Zwischenschicht (10) und eine äussere Deckschicht aufweist, wobei die Zwischenschicht (10) als Diffusionssperrschicht ausgebildet ist, die Aluminiumoxid, Magnesiumoxid oder Tantaloxid oder eine Mischung aus zwei Werkstoffen dieser Oxide oder ein Mehrschichtsystem aufweist, wobei die Deckschicht als Passivierungsschicht (3) ausgebildet ist, auf der der Substrat-Oberfläche abgewandten Seite der Widerstandsschicht (1) ausserhalb der Zwischenschicht eine Elektrode (4) aufgebracht ist, und wobei wich zwischen der Elektrode (4) und der Widerstandsschicht (1) wenigstens ein Teil der Passivierungsschicht (3) befindet.

2. Elektrischer Temperatur-Sensor nach Anspruch 1, **dadurch gekennzeichnet, dass** die Passivierungsschicht (3) aus Glas besteht.

3. Temperatur-Sensor nach Anspruch 1 oder 2, **dadurch gekennzeichnet, dass** die Dicke der Zwischenschicht (10) im Bereich von 0,2 µm bis 30 µm liegt.

4. Temperatur-Sensor nach Anspruch 1, **dadurch gekennzeichnet, dass** die Dicke des gesamten Mehrfachschicht maximal 60 µm beträgt.

5. Temperatur-Sensor nach einem der Ansprüche 1 bis 4, **dadurch gekennzeichnet, dass** die Elektrode (4) auf einem im Abstand zum Messwiderstand (1) gegenüberliegend angeordneten Trägersubstrat (12) aufgebracht ist.

6. Temperatur-Sensor nach Anspruch 5, **dadurch gekennzeichnet, dass** die Elektrode (4) eine auf dem Trägersubstrat (12) aufgebrachte Zuleitung (15) zu Messwiderstand (1) abdeckt.

7. Temperatur-Sensor nach Anspruch 6, **dadurch gekennzeichnet, dass** die Elektrode (4) durch eine Isolationsschicht (14) von der Zuleitung (15) galvanisch getrennt ist.

8. Temperatur-Sensor nach Ansprüche 1 bis 7, **dadurch gekennzeichnet, dass** die Elektrode (4) von der Passivierungsschicht (3) abgedeckt ist.

9. Temperatur-Sensor nach Ansprüche 1 bis 8, **dadurch gekennzeichnet, dass** die Elektrode (4) auf der der Widerstandsschicht (1) abgewandten Seite der Passivierungsschicht (3) angeordnet ist.

10. Temperatur-Sensor nach einem der Ansprüche 1 bis 9, **dadurch gekennzeichnet, dass** die Elektrode (4) mit einem äusseren elektrischen Anschluss versehen ist.

11. Temperatur-Sensor nach einem der Ansprüche 1 bis 9, **dadurch gekennzeichnet, dass** die Elektrode (4) gegenüber dem Messwiderstand (1) ein elektrisch negatives Potential besitzt und/oder elektrisch negativ vorgespannt ist.

12. Temperatur-Sensor nach einem der Ansprüche 1 bis 11, **dadurch gekennzeichnet, dass** die Elektrode (4) als Schicht ausgebildet ist.

13. Temperatur-Sensor nach einem der Ansprüche 1 bis 12, **dadurch gekennzeichnet, dass** die Elektrode (4) aus einer Platin aufweisenden Schicht besteht.

14. Temperatur-Sensor nach Anspruch 13, **dadurch gekennzeichnet, dass** die Elektrode (4) aus Platin besteht.

15. Temperatur-Sensor nach Anspruch 1, **dadurch gekennzeichnet, dass** das Keramiksubstrat (2) aus Al2O3 besteht.

16. Temperatur-Sensor nach Anspruch 1 oder 3, **dadurch gekennzeichnet, dass** die Zwischenschicht (10) aus Al2O3 besteht.

17. Temperatur-Sensor nach Anspruch 1, oder 3, **dadurch gekennzeichnet, dass** die Zwischenschicht (10) aus MgO besteht.

18. Temperatur-Sensor nach Anspruch 1 oder 3, **dadurch gekennzeichnet, dass** die Zwischenschicht (10) aus Tantaloxid besteht.

19. Temperatur-Sensor nach Anspruch 1, oder 3, **dadurch gekennzeichnet, dass** die Zwischenschicht (10) eine Mischung aus Al2O3 und MgO aufweist, wobei der Gewichtsanteil von Al2O3 im Bereich von 20% bis 70% liegt.

20. Temperatur-Sensor nach Anspruch 1, oder 3, **dadurch gekennzeichnet, dass** die Zwischenschicht (10) aus einem Schichtsystem mit einer Schichtenfolge von mindestens zwei Schichten besteht, die jeweils aus mindestens einem Oxid aus der Gruppe Al2O3, MgO, Ta205 gebildet sind.

21. Temperatur-Sensor nach Anspruch 20, **dadurch gekennzeichnet, dass** wenigstens eine Schicht aus zwei Oxiden gebildet ist.

22. Temperatur-Sensor nach Anspruch 1, oder 3, **dadurch gekennzeichnet, dass** die Zwischenschicht (10) mittels PVD- (Physical Vapour Deposition), IAD- (Ion Assisted Deposition), IEAD- (Ion Beam Assisted Deposition), PAD- (Plasma Assisted Deposition) oder Magnetron-Sputter-Verfahrens hergestellt ist.

23. Temperatur-Sensor nach einem der Ansprüche 1, 2, 8, oder 9, **dadurch gekennzeichnet, dass** die Passivierungsschicht (3) eine Mischung aus Si02, BaO und A1203 aufweist, wobei der Gewichts-Anteil von SiO2 im Bereich von 20 % bis 50 % liegt.

24. Temperatur-Sensor nach Anspruch 5, **dadurch gekennzeichnet, dass** ein Spalt zwischen Messwiderstand (1) und dem gegenüberliegenden Trägersubstrat (12) allseitig mit einem Abdichtglas (28) versiegelt wird und das Glas eine Mischung aus Si02, Al2O3 und BaO aufweist, wobei der Gewichtsanteil von Si02 im Bereich von 20% bis 50% liegt.

25. Verfahren zur Herstellung eines elektrischen Temperatursensors mit einer Platin aufweisenden Widerstandsschicht (1), die in Form einer Dünnschicht auf eine elektrisch isolierende Oberfläche eines Keramiksubstrats (2) aufgebracht und strukturiert wird, wobei nach Abschluss der Strukturierung der Widerstand zum Schutz gegen Kontamination oder Beschädigung mit einer Mehrfachschicht versehen wird, wobei unter Verwendug von Abschattmasken zum Erhalt freier Kontaktflächen mindestens eine Diffusionssperrschicht als Zwischenschicht (10) aufgebracht wird und im Abstand zur Widerstandsschicht (1) eine elektrisch leitende Schicht als Elektrode (4) aufgebracht wird, auf die elektrisch leitende Schicht eine Passivierungsschicht (3) aufgebracht wird, und wobei sich zwischen der Elektrode (4) und der Widerstandsschicht (1) wenigstens ein Teil der Passivierungsschicht (3) befindet.

26. Verfahren nach Anspruch 25, **dadurch gekennzeichnet, dass** als Diffusionssperrschicht eine Keramikschicht mittels Magnetron-Sputtern, PVD, CVD, IAD, PIAD aufgebracht wird.

27. Verfahren nach Anspruch 26, **dadurch gekennzeichnet, dass** die elektrisch leitende Schicht mittels Siebdrucken aufgebracht wird.

28. Verfahren nach Anspruch 26, **dadurch gekennzeichnet, dass** die elektrisch leitende Schicht mittels PVD oder Sputtern aufgebracht wird.

29. Verfahren nach einem der Ansprüche 26 bis 28, **dadurch gekennzeichnet, dass** der Passivierungsschicht (3) mittels Siebdrucken aufgebracht wird.

30. Verfahren zur Herstellung eines elektrischen Temperatur-Sensors nach einem der Ansprüche 25 bis 29 **dadurch gekennzeichnet, dass** mehrere Rohlinge aus Keramik ein zusammenhängendes Mehrfachsubstrat bilden, das gleichzeitig beschichtet und nach Aufbringen der Passivierungsschicht durch Sägen vereinzelt wird.

## Claims

1. An electric temperature sensor with a platinum-containing resistance layer (1) formed as a measuring resistor provided with electrical connections on an electrically insulating surface of a ceramic substrate (2), in which case, for protection against contamination or damage, the resistance layer (1) is provided with a multilayer comprising an electrically insulating intermediate layer (10) and an outer covering layer, the intermediate layer (10) being formed as a diffusion barrier layer containing aluminium oxide, magnesium oxide or tantalum oxide or a mixture of two materials of these oxides or else comprising a multilayer system and the covering layer being formed as a passivation layer (3), an electrode (4) being placed on the outside of the intermediate layer on the side of the resistance layer (1) away from the surface of the substrate and at least a part of the passivation layer (3) being located between the electrode (4) and the resistance layer (1).

2. An electric temperature sensor according to Claim 1, **characterized in that** the passivation layer (3) is made of glass.

3. A temperature sensor according to Claim 1 or 2, **characterized in that** the thickness of the intermediate layer (10) is in the range of 0.2 µm to 30 µm.

4. A temperature sensor according to Claim 1, **characterized in that** the thickness of the multilayer as a whole amounts to a maximum of 60 µm.

5. A temperature sensor according to one of Claims 1 to 4, **characterized in that** the electrode (4) is placed on a carrier substrate (12) disposed opposite, and at a distance from, the measuring resistor (1).

6. A temperature sensor according to Claim 5, **characterized in that** the electrode (4) covers a supply line (15), mounted on the carrier substrate (12), to measuring resistor (1).

7. A temperature sensor according to Claim 6, **characterized in that** the electrode (4) is physically separated from the supply line (15) by an insulation layer (14).

8. A temperature sensor according to Claims 1 to 7, **characterized in that** the electrode (4) is covered by the passivation layer (3).

9. A temperature sensor according to Claims 1 to 8, **characterized in that** the electrode (4) is placed on the side of the passivation layer (3) away from the resistance layer (1).

10. A temperature sensor according to one of Claims 1 to 9, **characterized in that** the electrode (4) is provided with an external electrical connection.

11. A temperature sensor according to one of Claims 1 to 9, **characterized in that** the electrode (4), when compared with the measuring resistor (1), has an electrically negative potential and/or is electrically negatively biased.

12. A temperature sensor according to one of Claims 1 to 11, **characterized in that** the electrode (4) is in the form of a layer.

13. A temperature sensor according to one of Claims 1 to 12, **characterized in that** the electrode (4) consists of a platinum-containing layer.

14. A temperature sensor according to Claim 13, **characterized in that** the electrode (4) is made of platinum.

15. A temperature sensor according to Claim 1, **characterized in that** the ceramic substrate (2) is made of Al₂O₃.

16. A temperature sensor according to Claim 1 or 3, **characterized in that** the intermediate layer (10) is made of Al₂O₃.

17. A temperature sensor according to Claim 1 or 3, **characterized in that** the intermediate layer (10) is made of MgO.

18. A temperature sensor according to Claim 1 or 3, **characterized in that** the intermediate layer (10) is made of tantalum oxide.

19. A temperature sensor according to Claim 1 or 3, **characterized in that** the intermediate layer (10) contains a mixture of Al₂O₃ and MgO, the percentage by weight of Al₂O₃ being in the range of 20% to 70%.

20. A temperature sensor according to Claim 1 or 3, **characterized in that** the intermediate layer (10) consists of a layer system comprising a series of at least two layers, each consisting of at least one oxide from the group Al₂O₃, MgO, Ta₂O₅.

21. A temperature sensor according to Claim 20, **characterized in that** at least one layer is made of two oxides.

22. A temperature sensor according to Claim 1 or 3, **characterized in that** the intermediate layer (10) is produced by means of PVD (Physical Vapour Deposition), IAD (Ion Assisted Deposition), IBAD (Ion Beam Assisted Deposition), PAD (Plasma Assisted Deposition) or Magnetron Sputter methods.

23. A temperature sensor according to one of Claims 1, 2, 8 or 9, **characterized in that** the passivation layer (3) contains a mixture of SiO₂, BaO and Al₂O₃, the percentage by weight of SiO₂ being in the range of 20% to 50%.

24. A temperature sensor according to Claim 5, **characterized in that** a gap between measuring resistor (1) and the carrier substrate (12) disposed opposite is sealed on all sides with a sealing glass (28) and the glass contains a mixture of SiO₂, Al₂O₃ and BaO, the percentage by weight of SiO₂ being in the range of 20% to 50%.

25. A method of manufacturing an electric temperature sensor with a platinum-containing resistance layer (1) applied and structured in the form of a thin layer on an electrically insulating surface of a ceramic substrate (2), in which case, on completion of the structuring and for protection against contamination or damage, the resistor is provided with a multilayer, in which case, using shadow masks to keep contact surfaces free, at least one diffusion barrier layer is applied as intermediate layer (10) and an electrically conductive layer is applied at a distance from the resistance layer (1) as electrode (4), a passivation layer (3) is applied onto said electrically conductive layer, and at least a part of the passivation layer (3) is located between the electrode (4) and the resistance layer (1).

26. A method according to Claim 25, **characterized in that** as diffusion barrier layer a ceramic layer is applied by means of Magnetron Sputtering, PVD, CVD, IAD, PIAD.

27. A method according to Claim 26, **characterized in that** the electrically conductive layer is applied by means of screen printing.

28. A method according to Claim 26, **characterized in that** the electrically conductive layer is applied by means of PVD or sputtering.

29. A method according to one of Claims 26 to 28, **characterized in that** the passivation layer (3) is applied by means of screen printing.

30. A method of manufacturing an electric temperature sensor according to one of Claims 25 to 29, **characterized in that** a number of ceramic blanks form a cohesive multiple substrate, which is coated altogether and, following application of the passivation layer, is separated using a saw.

## Revendications

1. Capteur de température électrique comprenant une couche résistive (1) contenant du platine à titre de résistance de mesure dotée de connexions électriques sur une surface électriquement isolante d'un substrat en céramique (2), dans lequel la couche résistive (1) est dotée d'une multicouche, qui présente une couche intermédiaire électriquement isolante (10) et une couche de recouvrement extérieure, pour la protection contre la contamination ou la détérioration, dans lequel la couche intermédiaire (10) prend la forme d'une couche bloquant la migration, qui présente de l'oxyde d'aluminium, de l'oxyde de magnésium ou de l'oxyde de tantale ou un mélange constitué des deux matériaux de ces oxydes ou un système multicouches, dans lequel la couche de recouvrement prend la forme d'une couche de passivation (3), sur laquelle une électrode (4) est déposée du côté opposé à la surface du substrat de la couche résistive (1), en dehors de la couche intermédiaire, et dans lequel au moins une partie de la couche de passivation (3) se trouve entre l'électrode (4) et la couche résistive (1).

2. Capteur électrique de température selon la revendication 1, **caractérisé en ce que** la couche de passivation (3) se compose de verre.

3. Capteur de température selon la revendication 1 ou 2, **caractérisé en ce que** l'épaisseur de la couche intermédiaire (10) se situe dans la plage allant de 0,2 µm à 30 µm.

4. Capteur de température selon la revendication 1, **caractérisé en ce que** l'épaisseur de la totalité de la multicouche atteint au maximum 60 µm.

5. Capteur de température selon l'une des revendications 1 à 4, **caractérisé en ce que** l'électrode (4) est déposée sur un substrat support (12) disposé en face, à distance de la résistance de mesure (1).

6. Capteur de température selon la revendication 5, **caractérisé en ce que** l'électrode (4) recouvre une conduite d'amenée (15) menant à la résistance de mesure (1), déposée sur le substrat support (12).

7. Capteur de température selon la revendication 6, **caractérisé en ce que** l'électrode (4) est séparée de la conduite d'amenée (15) par une couche d'isolation (14) par galvanisation.

8. Capteur de température selon les revendications 1 à 7, **caractérisé en ce que** l'électrode (4) est recouverte de la couche de passivation (3).

9. Capteur de température selon les revendications 1 à 8, **caractérisé en ce que** l'électrode (4) est disposée sur la face de la couche de passivation (3), opposée à la couche résistive (1).

10. Capteur de température selon l'une des revendications 1 à 9, **caractérisé en ce que** l'électrode (4) est dotée d'une connexion électrique extérieure.

11. Capteur de température selon l'une des revendications 1 à 9, **caractérisé en ce que** l'électrode (4) possède un potentiel électriquement négatif et/ou a une polarisation électriquement négative par rapport à la résistance de mesure (1).

12. Capteur de température selon l'une des revendications 1 à 11, **caractérisé en ce que** l'électrode (4) prend la forme d'une couche.

13. Capteur de température selon l'une des revendications 1 à 12, **caractérisé en ce que** l'électrode (4) se compose d'une couche contenant du platine.

14. Capteur de température selon la revendication 13, **caractérisé en ce que** l'électrode (4) se compose de platine.

15. Capteur de température selon la revendication 1, **caractérisé en ce que** le substrat en céramique (2) se compose de Al₂O₃.

16. Capteur de température selon la revendication 1, ou 3, **caractérisé en ce que** la couche intermédiaire (10) se compose de Al₂O₃.

17. Capteur de température selon la revendication 1, ou 3, **caractérisé en ce que** la couche intermédiaire (10) se compose de MgO.

18. Capteur de température selon la revendication 1, ou 3, **caractérisé en ce que** la couche intermédiaire (10) se compose d'oxyde de tantale.

19. Capteur de température selon la revendication 1, ou 3, **caractérisé en ce que** la couche intermédiaire (10) présente un mélange de Al₂O₃ et MgO, la proportion en poids de Al₂O₃ se situant dans la plage de 20 % à 70 %.

20. Capteur de température selon la revendication 1, ou 3, **caractérisé en ce que** la couche intermédiaire (10) se compose d'un système de couches ayant une succession d'au moins deux couches, qui sont formées respectivement d'au moins un oxyde choisi dans le groupe Al₂O₃, MgO, Ta₂O₅.

21. Capteur de température selon la revendication 20, **caractérisé en ce qu'**au moins une couche est formée de deux oxydes.

22. Capteur de température selon la revendication 1, ou 3, **caractérisé en ce que** la couche intermédiaire (10) est fabriquée au moyen d'un procédé PVD (dépôt en phase vapeur), IAD (dépôt assisté par une source d'ions), IEAD (dépôt assisté par faisceau ionique), PAD (dépôt assisté par plasma) ou pulvérisation magnétron.

23. Capteur de température selon l'une des revendications 1, 2, 8 ou 9, **caractérisé en ce que** la couche de passivation (3) présente un mélange de SiO₂, BaO et Al₂O₃, la proportion en poids du SiO₂ se situant dans la plage de 20 % à 50 %.

24. Capteur de température selon la revendication 5, **caractérisé en ce qu'**une fente située entre la résistance de mesure (1) et le substrat support (12) opposé est scellée de tous côtés par un verre d'étanchéité (28) et le verre présente un mélange de SiO₂, Al₂O₃ et BaO, la proportion en poids du SiO₂ se situant dans la plage de 20 % à 50 %.

25. Procédé de fabrication d'un capteur de température électrique comprenant une couche résistive (1) contenant du platine, qui est déposée sous la forme d'une couche mince sur une surface isolante électriquement d'un substrat en céramique (2) et est structurée, la résistance étant dotée, après achèvement de la structuration, d'une multicouche pour la protection contre la contamination ou la détérioration, dans lequel, en utilisant des masques pour obtenir des surfaces de contact libres, au moins une couche bloquant la migration est déposée à titre de couche intermédiaire (10) et une couche électriquement conductrice est déposée à titre d'électrode (4) à distance de la couche résistive (1), une couche de passivation (3) est déposée sur la couche électriquement conductrice, et au moins une partie de la couche de passivation (3) se trouve entre l'électrode (4) et la couche résistive (1).

26. Procédé selon la revendication 25, **caractérisé en ce qu'**une couche de céramique est déposée à titre de couche bloquant la migration au moyen des procédés de pulvérisation magnétron, PVD, CVD, IAD, PIAD.

27. Procédé selon la revendication 26, **caractérisé en ce que** la couche électriquement conductrice est déposée par sérigraphie.

28. Procédé selon la revendication 26, **caractérisé en ce que** la couche électriquement conductrice est déposée par PVD ou par pulvérisation.

29. Procédé selon l'une des revendications 26 à 28, **caractérisé en ce que** la couche de passivation (3) est déposée par sérigraphie.

30. Procédé de fabrication d'un capteur de température électrique selon l'une des revendications 25 à 29, **caractérisé en ce que** plusieurs pièces crues en céramique forment un substrat multicouche cohérent, qui est simultanément revêtu et individualisé par sciage après dépôt de la couche de passivation.
